(19) Europäisches Patentamt
European Patent Office
Office européen des brevets

(11) EP 4 053 194 B1

(12) EUROPEAN PATENT SPECIFICATION

(45) Date of publication and mention of the grant of the patent:
**02.08.2023 Bulletin 2023/31**

(21) Application number: **21160549.8**

(22) Date of filing: **03.03.2021**

(51) International Patent Classification (IPC):
***C08J 5/18*** (2006.01) ***A01F 15/00*** (2006.01)
***B32B 27/00*** (2006.01) ***C08L 23/08*** (2006.01)

(52) Cooperative Patent Classification (CPC):
(C-Sets available)
**C08J 5/18; A01F 25/13; C08F 210/06; C08F 210/16; C08L 23/0815;** C08F 4/65908; C08F 4/65912; C08J 2323/08 (Cont.)

(54) **MONOLAYER BLOWN FILM**

EINSCHICHTIGE BLASFOLIE

FILM SOUFFLÉ MONOCOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2022 Bulletin 2022/36**

(73) Proprietor: **Borealis AG**
**1020 Vienna (AT)**

(72) Inventors:
- **GALGALI, Girish Suresh**
  **4020 Linz (AT)**
- **ÄÄRILÄ, Jari**
  **06850 Kulloo (FI)**
- **ROSWALL, Carl-Fredrik**
  **06101 Porvoo (FI)**

(74) Representative: **Kador & Partner Part mbB**
**Corneliusstraße 15**
**80469 München (DE)**

(56) References cited:
**EP-B1- 2 935 367**
**WO-A2-2008/003020**
**US-A1- 2014 179 873**
**US-A1- 2020 325 316**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/6492;**
**C08F 210/16, C08F 2/001;**
**C08F 210/16, C08F 4/65925;**
**C08L 23/0815, C08L 23/0815;**
C08F 210/06, C08F 210/16, C08F 210/08;
C08F 210/16, C08F 210/08, C08F 2500/12;
C08F 210/16, C08F 210/14, C08F 210/08,
C08F 2500/12, C08F 2500/26;
C08F 210/16, C08F 210/14, C08F 2500/12,
C08F 2500/08

## Description

The present invention is directed to a monolayer blown film, which comprises at least 80.0 wt% of a specific trimodal metallocene-catalysed polyethylene copolymer with at least two different comonomers and its use for silage applications.

## BACKGROUND

Polyethylene, especially linear low density polyethylene (LLDPE) is widely used in daily life due to its low cost and high performance.

For example, such LLDPEs are used for film applications, like agricultural film applications, e.g. silage film.

Silage is a fermented, high-moisture stored fodder, which can be fed to cattle, sheep and other such ruminants. The silage or cattle fodder are made from crops, e.g. grass, maize, sugar beet pulp, malt, straw. Silage are typically prepared by using the entire plants, in the first step freshly cut green vegetation/plants are placed in silo/pit. Then this large heap of vegetation is compressed and the covered with net and plastic film. Since, freshly cut plants are used, the films used for making silage needs to have higher tear or puncture resistance and better mechanical properties to withstand pressure from the short cut stems, branches and hold the content tightly in the compressed condition. Therefore, films with higher puncture and mechanical properties are required for silage.

Especially protrusion puncture resistance is one of the key parameters.

In addition, tear resistance and processability are further key parameter. Low gel content in the used polymer is therefore advantageous as the polymer is more homogeneous and more readily processed.

Several proposals for silage film applications have already been made.

EP 3238938 A, for example, discloses a machine direction oriented (MDO) film comprising a multimodal polyethylene copolymer comprising a first copolymer of ethylene and a second copolymer of ethylene, said multimodal polyethylene copolymer comprising at least two alpha-olefin comonomers, whereby the MDO film is suited for silage formation and has good toughness and tear resistance.

The multimodal polyethylene copolymer is made with a Ziegler-Natta catalyst.

According to EP 3238938 A, the impact resistance according to ISO 7765-2 Instrumented puncture test and the tear resistance according to Tear Elmendorf ISO6383-2 are shown, which are improved by stretching the film made of the Ziegler-Natta catalysed film in machine direction.

EP 3238938 A does not mention the gel level of the film nor protrusion puncture related parameters, which are key parameters for silage applications.

EP 1472298 A discloses a multimodal PE polymer compositions having two different comonomers and blown films made therefrom. The multimodal PE polymers are polymerized in the presence of a metallocene catalyst. The Examples disclose multimodal PE polymer having two polymer components with, for instance, different type of comonomers.

The publication does seem to define any range for the melt flow ratio, $MFR_{21}$/ $MFR_2$ ($FRR_{21/2}$), of the final multimodal PE polymer, however said melt flow ratio of the exemplified polymers vary within the range of 38-55. The main focus of EP 1472298 A is on gloss and haze. EP 1472298 A does not mention the gel level of the films, nor protrusion puncture related parameters or tear resistance related parameters, which are key parameters for silage applications.

There is a continuous need to develop films made from multimodal PE polymers with different property balances for providing tailored solutions to meet the increasing demands of the end application producers e.g. for reducing the production costs while maintaining or even improving the end product properties. Tailored polymer solutions are also needed to meet the requirements of continuously developing equipment technology in the end application field. Thus, the object of the present invention is to provide a film based on a multimodal PE polymer with an unexpected property combination, which offer a desirable alternative especially for silage film.

The inventors sought of a film based on a multimodal PE polymer which has improved tear resistance and improved protrusion puncture parameters.

In addition, the films based on the multimodal PE polymer have a low gel content. Low gel content in the polymer is advantageous as the polymer is more homogeneous and more readily processed. Lower gels also means fewer defects, lower extractables and hence generally improved mechanical and optical properties.

## Description of the invention

The present invention is therefore directed to a monolayer blown film comprising at least 80.0 wt% of a trimodal metallocene-catalysed polyethylene copolymer with at least two different comonomers selected from alpha-olefins having from 4 to 10 carbon atoms, which has

a) $MFR_2$ of 0.5 to 5 g/10 min (ISO 1133, 190°C, 2.16 kg load),
b) $MFR_{21}$/ $MFR_2$ of 10 to 25 ($MFR_{21}$ according to ISO1133, 190°C, 21.6 kg load)
c) a density of 910 to 925 kg/$m^3$ determined according to ISO 1183
d) a MWD in the range of from 3.0 to 5.0 and

which consists of

(i) an ethylene polymer component (A), comprising ethylene polymer fraction (A-1) and ethylene polymer fraction (A-2) and
(ii) an ethylene polymer component (B),

wherein the $MFR_2$ of the ethylene polymer components (A) and (B) are different from each other,
wherein the monolayer blown film is characterized
by a relative Elmendorf tear resistance measured according to ISO 6383/2 on a blown film with a film thickness of 40 μm in machine direction (MD) of at least 125 N/mm and in transversal direction (TD) of at least 165 N/mm.

Viewed from a further aspect, the invention is directed to a blown film comprising the above defined trimodal metallocene-catalysed polyethylene copolymer, wherein the monolayer blown film is further characterized by a puncture energy to break measured according to ASTM D5748 of at least 125 J/mm, preferably at least 130 J/mm.

Viewed from another aspect of the invention, the blown film is in addition or alternatively characterized by an optical gel index of 12 or less, measured with an OCS gel counting apparatus on films with a film thickness of 70 μm as described in the experimental part.

**Detailed Description of the Invention**

This invention relates to a monolayer blown film based on a specific trimodal metallocene-catalysed polyethylene copolymer having low gel content and improved tear resistance as well as protrusion puncture parameters.

*Trimodal Metallocene Produced Polyethylene Copolymer*

Metallocene catalysed polyethylene copolymer is defined in this invention as polyethylene, which has been produced in the presence of a metallocene catalyst.

Trimodal is defined in this invention as polyethylene which has been produced in 3 subsequent main polymerization steps, like slurry - slurry - gas phase. A prepolymerization step is no main polymerization step in the sense of to this invention.

The trimodal metallocene catalysed metallocene-catalysed polyethylene copolymer of the invention as defined above, below or in claims is also referred herein shortly as "trimodal polyethylene copolymer" or "trimodal PE".

The trimodal metallocene catalysed polyethylene copolymer consists of

(i) an ethylene polymer component (A), comprising, preferably consisting of, ethylene polymer fraction (A-1) and ethylene polymer fraction (A-2) and
(ii) an ethylene polymer component (B),

It is preferred if the trimodal metallocene catalysed polyethylene copolymer is a metallocene catalysed linear low density polyethylene (LLDPE), which has a well known meaning in the state of the art.

The trimodal metallocene catalysed polyethylene copolymer used according to the present invention is a copolymer of ethylene with at least two alpha-olefin comonomers having from 4 to 10 carbon atoms. Ideally, the comonomer(s) present are selected from the group consisting of 1-butene, 1-hexene or 1-octene. Most preferred comonomers are 1-butene and 1-hexene.

The trimodal metallocene catalysed polyethylene copolymer may thus contain from 0.5 to 10.0 mol% of comonomers, preferably from 1.0 to 8.0 mol% of comonomers and more preferably from 2.0 to 7.0 mol% of comonomers, based on the trimodal polyethylene copolymer.

Thus, the trimodal metallocene catalysed polyethylene copolymer may contain from 90.0 to 99.5 mol%, preferably from 92.0 to 99.0 mol%, more preferably from 93.0 to 98.0 mol% of units derived from ethylene and from 0.5 to 10.0 mol%, preferably 1.0 to 8.0 mol%, more preferably 2.0 to 7.0 mol% of units derived from the comonomers, based on the trimodal polyethylene copolymer.

Preferably, the amount (mol%) of 1-butene present in the trimodal metallocene catalysed polyethylene copolymer is from 0.05 mol% to less than 1.0 mol%, more preferably from 0.10 to 0.90 mol%, even more preferably of from 0.15 to 0.80 mol%, and still more preferably of from 0.20 to 0.60 mol%, based on the trimodal polyethylene copolymer.

The amount (mol%) of 1-hexene present in the trimodal metallocene catalysed polyethylene copolymer is of 1.5 to 10.0 mol%, preferably of 2.0 to 8.0 mol%, more preferably of 2.2 to 6.0 mol%, even more preferably of 2.5 to 5.0 mol%, based on the trimodal polyethylene copolymer.

The trimodal metallocene catalysed polyethylene copolymer used according to the present invention is a polyethylene copolymer having a density (ISO 1183) of 910 to 925 kg/m$^3$. Preferably, the density is in the range of 910 to 922 kg/m$^3$, more preferably in the range of 912 to 920 kg/m$^3$.

The melt flow rate (ISO1133, 2.16 kg, 190°C) ($MFR_2$) of the trimodal metallocene catalysed polyethylene copolymer is in the range of 0.5 to 5.0 g/10min, preferably in the range of 0.8 to 3.0 g/10 min and more preferably in the range of 1.0 to 2.5 g/10 min.

The melt flow ratio $MFR_{21}/MFR_2$ of the trimodal metallocene catalysed polyethylene copolymer is in the range from 10 to 25, preferably in the range from 12 to 22 and more preferably in the range from 15 to 20 ($MFR_{21}$ is determined according to ISO 1133 at 190°C under 21.6 kg load).

In an embodiment of the present invention, the ratio of the $MFR_2$ of ethylene polymer component (A) ($MFR_2$(A)) to the $MFR_2$ of the trimodal metallocene catalysed polyethylene copolymer ($MFR_2$(final)), $MFR_2$(A)/$MFR_2$(final) is below 4.0, preferably in a range of from 2.0 to 3.8, more preferably from 2.5 to 3.5.

As stated above, the trimodal metallocene catalysed polyethylene copolymer consists of

(i) an ethylene polymer component (A), comprising, preferably consisting of, ethylene polymer fraction (A-1) and ethylene polymer fraction (A-2) and
(ii) an ethylene polymer component (B).

Ideally, the trimodal polyethylene copolymer consists of an ethylene polymer component (A) of ethylene and an alpha-olefin comonomer having from 4 to 10 carbon atoms and an ethylene polymer component (B) of ethylene and an alpha-olefin comonomer having from 6 to 10 carbon atoms. Preferably, the comonomers used in the two components are different.

Especially preferred is a trimodal polyethylene copolymer consisting of

- an ethylene polymer component (A) of ethylene and 1-butene, and
- an ethylene polymer component (B) of ethylene and 1-hexene.

More preferably, the components (A) and (B) have different MFR values and/or different densities. It is furthermore preferred that ethylene polymer component (A) has a higher density than ethylene polymer component (B).

The ethylene polymer component (A) may have a melt flow rate $MFR_2$ (ISO1133, 2.16 kg, 190°C) of from 1.0 to 20.0 g/10min, preferably 2.0 to 15.0 g/10 min, more preferably 3.0 to 10.0 g/10 min.

Furthermore, the ethylene polymer component (A) may have a density (ISO 1183) of from 925 to 955 kg/m$^3$, preferably from 930 to 955 kg/m$^3$, more preferably from 935 to 950 kg/m$^3$, and even more preferably from 935 to 945 kg/m$^3$.

The ethylene polymer component (A) is ideally produced in a first polymerization stage, which is preferably a slurry polymerization step. Hydrogen can be introduced into the first polymerization stage for controlling the $MFR_2$ of the ethylene polymer component (A). The first alpha-olefin comonomer is introduced into the first polymerization stage for controlling the density of the ethylene polymer component (A). As discussed above, the comonomer is an alpha-olefin having from 4 to 10 carbon atoms, preferably 1-butene, 1-hexene or 1-octene, more preferably 1-butene.

According to the present invention, the trimodal polyethylene copolymer consists of the ethylene polymer component (A) and the ethylene polymer component (B), wherein the ethylene polymer component (A) comprises at least a first and a second ethylene polymer fraction (A-1 and A-2), preferably consists of the first ethylene polymer fraction (A-1) and second ethylene polymer fraction (A-2).

These two or more fractions, preferably two fractions, of the first copolymer component (A) may be unimodal in view of their molecular weight and/or their density or they can be bimodal in respect of their molecular weight and/or their density.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

Each fraction of the ethylene polymer component (A) is a polyethylene copolymer with one or more alpha-olefins having from 4 to 10 carbon atoms, preferably 1-butene, 1-hexene or 1-octene, more preferably 1-butene. Ideally, each fraction contains a single comonomer. Most preferred, each ethylene polymer fraction (A-1) and (A-2) is an ethylene-1-butene copolymer.

It is further preferred, that the two or more fractions of the ethylene polymer component (A) are produced in two or more consecutive reactors. The ethylene polymer component (A) can be unimodal or bimodal in view of $MFR_2$-values and/or density-values.

The second ethylene copolymer component (B) is produced in the presence of any previously produced polymer

components.

More preferably, the ethylene polymer component (A) has higher $MFR_2$ than the ethylene polymer component (B).

Even more preferably, the ratio of the $MFR_2$ of ethylene polymer component (A) to the $MFR_2$ of ethylene polymer component (B) is of 1.5 to 30, preferably of 2.0 to 20, more preferably of 2.5 to 10 and even more preferably of 2.8 to 8.0.

If the $MFR_2$ of component (B) or fraction (A-2), e.g. copolymer (ii), cannot be measured, because it cannot be isolated from the mixture of component (A) and component (B) or fraction (A-1) and (A-2), then it can be calculated using a log mixing rule.

According to a further preferred embodiment the trimodal polyethylene copolymer is further multimodal with respect to difference in density between the ethylene polymer component (A) and ethylene polymer component (B). Preferably, the density of ethylene polymer component

(A) is different, preferably higher, than the density of the ethylene polymer component (B).
The ratio (i.e. the split) between the first and the second ethylene polymer component (A) and
(B) within the final trimodal polyethylene copolymer with at least two alpha-olefin-comonomers has significant effect on the mechanical properties of the final composition.

It is hence envisaged within the scope of the invention that the second ethylene polymer component (B) forms a significant part of the polymer fractions present in the trimodal polyethylene copolymer, i.e. at least 50.0 wt% of the final trimodal polyethylene copolymer, preferably 53.0 wt% or more, such as 55.0 wt% or more.

More preferably, the second ethylene polymer component (B) may form up to 65.0 wt% of the trimodal polyethylene copolymer.

Consecutively the first ethylene polymer component (A) forms at most 50.0 wt% or less of the trimodal polyethylene copolymer, preferably 47.0 wt% or less, such as 45.0 wt% or less. More preferably, the first ethylene polymer component (A) may form 35.0 wt% up to at most 50 wt% of the trimodal polyethylene copolymer.

Trimodal polyethylene copolymers can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer.

Such a process is described inter alia in WO 2016/198273. Full details of how to prepare suitable trimodal polyethylene copolymers can be found in this reference.

A suitable process is the Borstar PE 3G process.

The trimodal polyethylene copolymer used according to the present invention is therefore preferably produced in a loop loop gas cascade. Such polymerization steps may be preceded by a prepolymerization step. A prepolymerization step is no main polymerization step in the sense of to this invention. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final trimodal polyethylene copolymer. This can counted as part of the first ethylene polymer component (A).

## *Catalyst*

The trimodal polyethylene copolymer used in the process of the invention is one made using a metallocene catalyst. A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

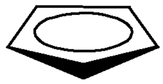

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

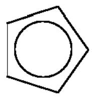

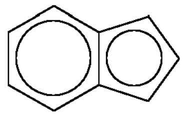

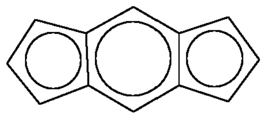

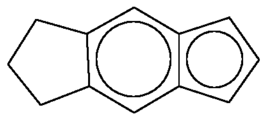

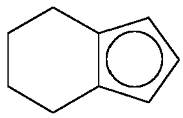

which can obviously be substituted. The metallocene complex preferably does not comprise a single cyclopentadienyl type ligand. Preferably, two such cyclopentadienyl type ligands are present, optionally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis-cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
R is a bridge of 1-7 atoms, e.g. 1 to 2 atoms;
X is a sigma ligand;
n is 0 or 1;
M is a transition metal of Group 4, e.g. Ti, Zr or Hf, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g.

$C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$, OR" or-NR"$_2$,

each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of -NR"$_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as $C_1$-$C_{20}$-alkyl, tri($C_1$-$C_{20}$-alkyl)silyl, tri($C_1$-$C_{20}$-alkyl)siloxy or $C_6$-$C_{20}$-aryl substituents); or a bridge of 1-3, e.g. one or two, hetero atoms, such as silicon, germanium and/or oxygen atom(s), e.g. -$SiR^2_2$-, wherein each $R^2$ is independently $C_1$-$C_{20}$-alkyl, $C_{3-12}$-cycloalkyl, $C_6$-$C_{20}$-aryl or tri($C_1$-$C_{20}$-alkyl)silyl- residue, such as trimethylsilyl;

M is a transition metal of Group 4, e.g. Ti, Zr or Hf, especially Zr or Hf;

each X is independently a sigma-ligand, such as H, halogen, $C_1$-$C_{20}$-alkyl, $C_1$-$C_{20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$, -SiR"$_3$, -OSiR"$_3$, -NR"$_2$ or -$CH_2$-Y, wherein Y is $C_6$-$C_{20}$-aryl, $C_6$-$C_{20}$-heteroaryl, $C_1$-$C_{20}$-alkoxy, $C_6$-$C_{20}$-aryloxy, NR"$_2$, -SR", -PR"$_3$, -SiR"$_3$, or-OSiR"$_3$;

each of the above mentioned ring moieties alone or as a part of another moiety as the substituent for Cp, X, R" or $R^2$ can further be substituted e.g. with $C_1$-$C_{20}$-alkyl which may contain Si and/or O atoms;

n is 0 or 1.

Suitably, in each X as -$CH_2$-Y, each Y is independently selected from $C_6$-$C_{20}$-aryl, NR"$_2$, -SiR"$_3$ or -OSiR"$_3$. Most preferably, X as -$CH_2$-Y is benzyl. Each X other than -$CH_2$-Y is independently halogen, $C_1$-$C_{20}$-alkyl, $C_1$-$C_{20}$-alkoxy, $C_6$-$C_{20}$-aryl, $C_7$-$C_{20}$-arylalkenyl or -NR"$_2$ as defined above, e.g. -N($C_1$-$C_{20}$-alkyl) $_2$.

Preferably, each X is halogen, methyl, phenyl or -$CH_2$-Y, and each Y is independently as defined above.

Cp is preferably cyclopentadienyl, indenyl, tetrahydroindenyl or fluorenyl, optionally substituted as defined above. More preferably Cp is a cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from $C_1$-$C_{20}$-alkyl, $C_6$-$C_{20}$-aryl, $C_7$-$C_{20}$-arylalkyl (wherein the aryl ring alone or as a part of a further moiety may further be substituted as indicated above), -OSiR"$_3$, wherein R" is as indicated above, preferably $C_1$-$C_{20}$-alkyl.

R, if present, is preferably a methylene, ethylene or a silyl bridge, whereby the silyl can be substituted as defined above, e.g. a (dimethyl)Si=, (methylphenyl)Si=, (methylcyclohexyl)silyl= or (trimethylsilylmethyl)Si=;

n is 0 or 1.

Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. $C_{1-6}$-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -$SiMe_2$. The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

In another embodiment, the metallocene has the following formula (II):

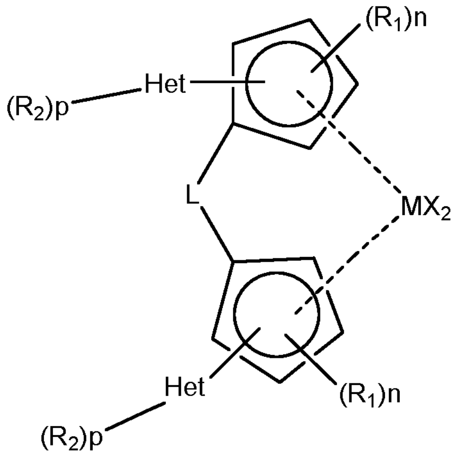

(II)

wherein each X is independently a halogen atom, a $C_1$-$_6$-alkyl, $C_1$-$_6$-alkoxy group, phenyl or benzyl group;
each Het is independently a monocyclic heteroaromatic containing at least one heteroatom selected from O or S;
L is -$R'_2$Si-, wherein each R' is independently $C_1$-$_{20}$-hydrocarbyl or $C_1$-10-alkyl substituted with alkoxy having 1 to 10 carbon atoms;
M is Ti, Zr or Hf;
each $R_1$ is the same or different and is a $C_1$-$_6$-alkyl group or $C_1$-$_6$-alkoxy group;
each n is 1 to 2;
each $R_2$ is the same or different and is a $C_1$-$_6$-alkyl group, $C_1$-$_6$-alkoxy group or -Si(R)$^3$ group;
each R is C1-10-alkyl or phenyl group optionally substituted by 1 to 3 $C_1$-$_6$-alkyl groups; and
each p is 0 to 1.

Preferably, the compound of formula (II) has the structure (II')

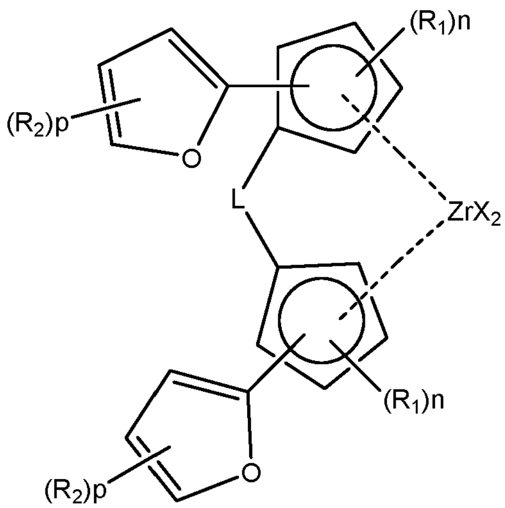

(II´)

wherein each X is independently a halogen atom, a $C_1$-$_6$-alkyl, $C_1$-$_6$-alkoxy group, phenyl or benzyl group;
L is a $Me_2$Si-;
each $R_1$ is the same or different and is a $C_1$-$_6$-alkyl group, e.g. methyl or t-Bu;
each n is 1 to 2;
$R_2$ is a -Si(R)$^3$ alkyl group; each p is 1;
each R is $C_1$-$_6$-alkyl or phenyl group.

Highly preferred complexes of formula (II) are

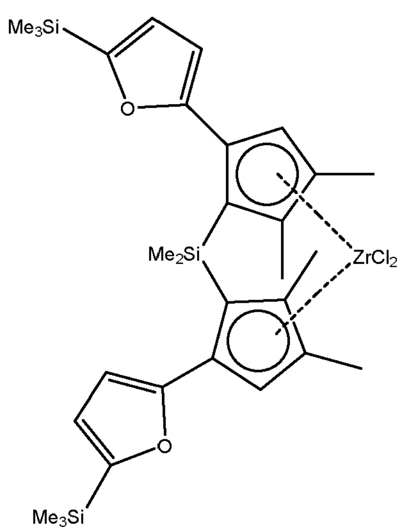
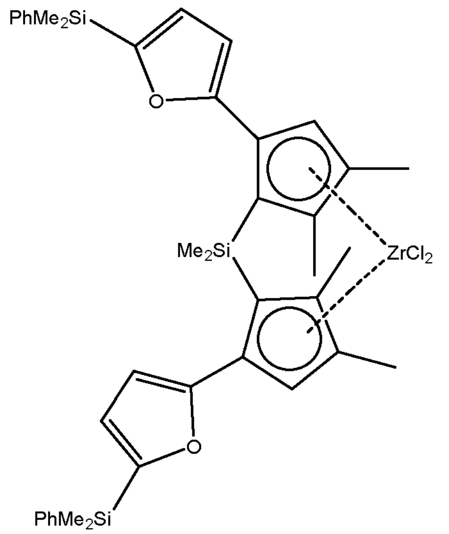
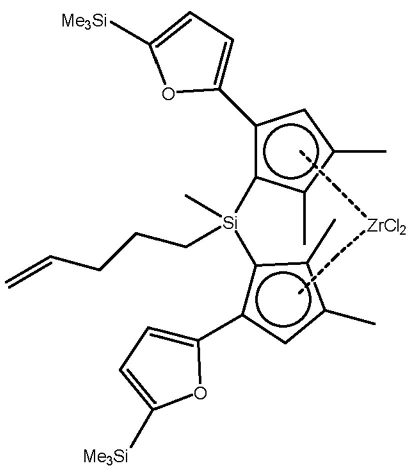
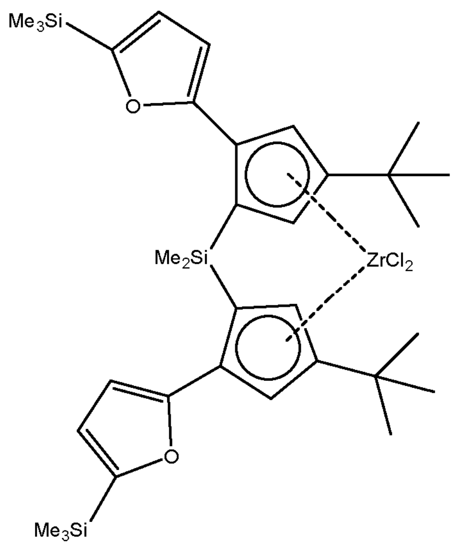

To form a catalyst, a cocatalyst is used as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

**Film of the invention**

The film of the invention is a monolayer blown film comprising at least 80.0 wt% of the trimodal metallocene-catalysed polyethylene copolymer as described above. The term "monolayer film" have a well known meaning in the art.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

The films according to the present invention typically have a thickness of 100 μm or below, such as 10 μm to 90 μm, e.g. 20 to 80 μm.

It is within the scope of the present invention, that the film layer comprises at least 80 wt%, preferably at least 85 wt%, more preferably at least 90 wt% and even more preferred at least 95 wt% of the trimodal metallocene-catalysed polyethylene copolymer as described above.

Thus the film according to the present invention comprises at least 80 wt% up to 100 wt%, preferably at least 85 wt% up to 100 wt%, more preferably at least 90 wt% up to 100 wt% and even more preferred at least 95 wt% up to 100 wt%.

In an embodiment, the film consists of the trimodal metallocene-catalysed polyethylene copolymer as described above.

It is within the scope of the present invention that the trimodal metallocene-catalysed polyethylene copolymer may be contain additives, such as phenolic stabilizers, antioxidants, slip and antistatic agents, antiblock agents processing aids, colorants and the like.

Preferably, these additives are added in an amount from 0 to 5000 ppm, preferably from 10 to 5000 ppm and more preferably from 500 to 3000 ppm based on the overall weight of the respective layer.

The skilled person can readily select any suitable combination of additives and additive amounts without undue experimentation

The trimodal metallocene catalysed polyethylene copolymer may also be combined with other polymer components, e.g. low density polyethylene (LDPE), preferably a low density polyethylene produced in a high pressure process.

The LDPE preferably has a density (ISO1183) in the range of 910 to 940 kg/m$^3$, more preferably in the range of 915 to 935 kg/m$^3$, still more preferably in the range of 918 to 930 kg/m$^3$.

Further it is preferred that the LDPE has a melt flow rate $MFR_2$ (ISO1133, 2.16 kg, 190°C) in the range of from 0.05 to 2.0 g/10min, more preferably in the range of from 0.10 to 1.8 g/10min, and even more preferably in the range of from 0.15 to 1.5 g/10 min.

In case such an LDPE is added, the trimodal metallocene catalysed polyethylene polymer is combined with 0.0 to 20.0 wt%, preferably 5.0 to 18.0 wt% and more preferably 8.0 to 15.0 wt%, of a low density polyethylene (LDPE).

The films of the invention are characterized by a relative Elmendorf tear resistance measured according to ISO 6383/2 on a blown film with a film thickness of 40 $\mu$m in machine direction (MD) of at least 125 N/mm and in transversal direction (TD) of at least 165 N/mm.

Preferably, the relative Elmendorf tear resistance measured according to ISO 6383/2 on a blown film with a film thickness of 40 $\mu$m in machine direction (MD) is at least 130 N/mm and in transversal direction (TD) at least 175 N/mm.

A suitable upper limits for the tear resistance (MD, as well as TD) is 300 N/mm, preferably 260 N/mm, more preferably 220 N/mm.

In a preferred embodiment the film of the invention is further characterized by a puncture energy to break measured according to ASTM D5748 on a blown film with a film thickness of 40 $\mu$m of at least 125 J/mm, preferably at least 130 J/mm. A suitable upper limit is 1000 J/mm, preferably 800 J/mm, more preferably 500 J/mm.

Additionally or alternatively, the film of the invention may be further characterized by a puncture force to break measured according to ASTM D5748 on a blown film with a film thickness of 40 $\mu$m of at least 760 N/mm, preferably at least 780 N/mm. A suitable upper limit is 1500 N/mm, preferably 1200 N/mm, more preferably 1000 N/mm.

In a further embodiment the films of the invention are additionally or alternatively characterized by an optical gel index of 12 or less, measured with an OCS gel counting apparatus on films with a film thickness of 70 $\mu$m as described in the experimental part.

Preferably the optical gel index is 10 or less, more preferably 9 or less.

In an ideal case the lower limit for the optical index is 0.1.

The films of the present invention therefore are additionally or alternatively characterized by a very low level of gels, particularly low levels of gels with a size > 1000 microns and/or with a size of 600-1000 micron and/or with a size of 300-599 micron and/or with a size of 100-299 micron.

Preferably, the number of gels per square meter with a size of 600-1000 micron is 0 to below 10, preferably below 8, more preferably below 6 and/or the number of gels per square meter with a size > 1000 micron is 0 to below 10, preferably below 8, more preferably below 6.

The number of gels per square meter with a size of 300-599 micron is preferably 0 to below 10, preferably below 5, more preferably below 4 and/or the number of gels per square meter with a size of 100-299 micron is 0 to below 100, preferably below 90, more preferably below 80.

In a further preferred embodiment, the films of the invention have no gels per square meter with a size of 600 micron and above.

It is within the scope of the invention that the films are, additionally or alternatively, characterized by a tensile modulus in machine direction measured according to ISO 527-3 on a 40 micron blown film of at least 140 MPa, preferably at least 160 MPa, e.g. 160 to 300 MPa, and by a tensile modulus in transverse direction of at least 140 MPa, preferably at least 160 MPa, e.g. 160 to 400 MPa.

In one further embodiment of the present invention the sealing initiation temperature determined on a blown film with a thickness of 40 $\mu$m is in the range of 70°C to below 100°C, preferably in the range of 75°C to 95°C and more preferably in the range of 80°C to 90°C.

The films according to the present invention are highly useful for being used in packaging silage.

The invention will be further described with reference to the following non-limiting examples.

**METHODS**

The following definitions of terms and determination methods apply for the above general description of the invention as well as to the below examples unless otherwise defined.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$), 5 kg ($MFR_5$) or 21.6 kg ($MFR_{21}$).

**Density**

Density of the polyethylene was measured according to ISO 1183-1:2004 (method A) on compression moulded specimen prepared according to EN ISO 1872-2 (Feb 2007) and is given in $kg/m^3$.

**Molecular weights, molecular weight distribution, Mn, Mw, MWD**

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1mL/min. 500 mL of sample solution were injected per analysis. The column set was calibrated using universal calibration (according to ISO 16014-2:2003) with narrow MWD polystyrene (PS) standards in the range of 1.05 kg/mol to 11600 kg/mol. Mark Houwink constants were used for polystyrene and polyethylene (K: 19 x10-3 dL/g and a: 0.655 for PS, and K: 39 x10-3 dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Comonomer contents: Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner

incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * (\ fB * 56.11) / (\ (fB * 56.11) + (fH * 84.16) + ((1-(fB + fH)) * 28.05)\ )$$

$$H\ [wt\%] = 100 * (\ fH * 84.16\ ) / (\ (fB * 56.11) + (fH * 84.16) + ((1-(fB + fH)) * 28.05)\ )$$

References:

klimke06: Klimke, K., Parkinson, M., Piel, C., Kaminsky, W., Spiess, H.W., Wilhelm, M., Macromol. Chem. Phys. 2006;207:382.

parkinson07: Parkinson, M., Klimke, K., Spiess, H.W., Wilhelm, M., Macromol. Chem. Phys. 2007;208:2128.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

griffin07: Griffin, J.M., Tripon, C., Samoson, A., Filip, C., and Brown, S.P., Mag. Res. in Chem. 2007 45, S1, S198

castignolles09 : Castignolles, P., Graf, R., Parkinson, M., Wilhelm, M., Gaborieau, M., Polymer 50 (2009) 2373

busico01: Busico, V., Cipullo, R., Prog. Polym. Sci. 26 (2001) 443

busico97: Busico, V., Cipullo, R., Monaco, G., Vacatello, M., Segre, A.L., Macromoleucles 30 (1997) 6251

zhou07: Zhou, Z., Kuemmerle, R., Qiu, X., Redwine, D., Cong, R., Taha, A., Baugh, D. Winniford, B., J. Mag. Reson. 187 (2007) 225

busico07: Busico, V., Carbonniere, P., Cipullo, R., Pellecchia, R., Severn, J., Talarico, G., Macromol. Rapid Commun. 2007, 28, 1128

resconi00 : Resconi, L., Cavallo, L., Fait, A., Piemontesi, F., Chem. Rev. 2000, 100, 1253


***Gel content:***

Gel content was analyzed by an Optical Control System (OCS Film-Test FSA100) with a CCD (Charged-Coupled Device) camera provided by Optical Control Systems GmbH, which measures gels and defects in the film produced from the compositions. The gels and defects are recognized optoelectronically by their different light transmittance compared to the film matrix.

A translucent 70 μm thick cast film, produced on an OCS cast film line, was photographed using high resolution line cameras and appropriate background illumination. The number and the area of gels per total film area are then

calculated using an image recognition software. A cast film sample of about 70 μm thickness, was extruded and examined with a CCD (Charged-Coupled Device) camera, image processor and evaluation software (Instrument:OCS-FSA100, supplier OCS GmbH (Optical Control System)). The film defects were measured and classified according to their size (longest dimension).

Cast film preparation, extrusion parameters:

1. Output 25±4g/min
2. Extruder temperature profile: 230-230-230-220-210 (Melt temp 223°C)
3. Film thickness about 70 μm
4. Chill Roll temperature 55-65°C
5. No Airknife needed

Technical data for the extruder:

1. Screw type: 3 Zone, nitrated
2. Screw diameter: 25 mm
3. Screw length: 25D
4. Feeding zone: 10D
5. Compression zone: 4D
6. Die 100mm

The film defects/gels are measured and classified according to their size (longest dimension).

The defects were classified according to the size (μm)/$m^2$:

100-299
300-599
600-999
>1000

The number of found defects is, referring 1/$m^2$, class-divided according to size and multiplied with the mass factor, adding up to the gelindex.

Size class 1: 100-299 μm; mass factor x 0.1
Size class 2: 300-599 μm; mass factor x 1.0
Size class 3: 600-1000 μm; mass factor x 5.0
Size class 4: > 1000 μm; mass factor x 10

**Protrusion puncture resistance parameter**

Energy to break (J/mm) and force at break (N/mm) have been measured according ASTM D57748 on blown films with a thickness of 40 μm.

This method determines the resistance of a (stretch wrap) film to the penetration of a specimen at a standard low rate, a single test velocity. Performed at standard conditions, the test method imparts a biaxial stress that is representative of the type of stress encountered in many product end-use applications.

Condition-set: outside to inside

Conditioning time: > 96 h / Temperature: 23 °C / Test speed: 250 mm/min / Type of striker: Teflon coated

**Tear resistance** (determined as Elmendorf tear (N) in machine (MD) and transverse (TD) direction:

The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

## Tensile modulus on films

Tensile moduli in machine (MD)/transverse (TD) direction were determined acc. to ISO 527-3 on blown films with a thickness of 40 μm at a cross head speed of 1 mm/min.

## Sealing initiation temperature (SIT); sealing end temperature (SET), sealing range:

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range was determined on a J&B Universal Sealing Machine Type 4000 with a blown film of 40 μm thickness with the following further parameters:

Specimen width: 25.4 mm
Seal Pressure: 0.1 $N/mm^2$
Seal Time: 0.1 sec
Cool time: 99 sec
Peel Speed: 10 mm/sec
Start temperature: 80 °C
End temperature: burn through
Increments: 5 °C

## Experimental part

## Preparation of examples

## Cat.Example: Catalyst preparation

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

## Polymerization: Inventive Example 1: trimodal metallocene-catalysed polymer of ethylene with 1-butene and 1-hexene comonomers

Borstar plant with a 3-reactor set-up (loop1 - loop2 - GPR 1) and a prepolymerization loop reactor was used for the Inventive Example. Propane is used as diluent in loops. For the Comparative Example only loop 2 was used.

**Table 1: Polymerization conditions of Comparative (CE) and Inventive (IE) Examples**

| Example | CE | IE |
|---|---|---|
| **Prepoly reactor** | | |
| Temperature (°C) | 60 | 60 |
| $C_3$ feed (kg/h) | 2000 | 2000 |
| $C_2$ feed (kg/h) | 300 | 300 |
| $C_4/C_2$ (kg/t) | 25 | 25 |
| **loop 1** | | |
| Temperature (°C) | n.a. | 85 |
| $C_2$ conc. (mol%) | n.a. | 4.5 |
| $H_2/C_2$ ratio (mol/kmol) | n.a. | 0.04 |
| $C_4/C_2$ ratio (mol/kmol) | n.a. | 65 |
| $MFR_2$ (g/10 min) of loop 1 material | n.a. | 5.7 |
| Density (kg/m$^3$) of loop 1 material | n.a. | 938 |
| **loop 2** | | |
| Temperature (°C) | 85 | 85 |
| $C_2$ conc. (mol%) | 4.0 | 4.0 |
| $H_2/C_2$ ratio (mol/kmol) | 0.3 | 0.3 |
| $C_4/C_2$ ratio (mol/kmol) | 110 | 70 |
| $MFR_2$ (g/10 min) after loop 2 ($MFR_2$ (A)) | 6.0 | 4.4 |
| Density (kg/m$^3$) after loop 2 (density (A)) | 940 | 940 |
| **GPR** | | |
| Temperature (°C) | 75 | 75 |
| $C_2$ partial Press. (bar) | 6 | 4.5 |
| $H_2/C_2$ ratio (mol/kmol) | 0.3 | 0.3 |
| $C_6/C_2$ ratio (mol/kmol) | 38 | 40 |
| Split (%) | 58 | 58 |
| $MFR_2$ (g/10 min) of GPR material | 0.55 | 0.7 |
| Density (kg/m$^3$) of GPR material | 902 | 902 |

The polymers were mixed with 2400 ppm of Irganox B561 and 270 ppm Dynamar FX 5922, compounded and extruded under nitrogen atmosphere to pellets by using a CIMP90 extruder so that the SEI was 230 kWh/kg and the melt temperature 250 °C.

**Table 2: Material properties**

| Material | CE | IE |
|---|---|---|
| $MFR_2$ (g/10min) ($MFR_2$(final)) | 1.5 | 1.5 |

(continued)

| Material | CE | IE |
|---|---|---|
| $MFR_{21.6}$ (g/10min) | 29.1 | 27.1 |
| $MFR_{21}/MFR_2$ | 19.4 | 18.1 |
| $MFR_2$ (A)/$MFR_2$(final) | 4 | 2.9 |
| Density (kg/m3) | 918 | 918 |
| C4 (mol%) | 0.3 | 0.3 |
| C6 (mol%) | 2.8 | 2.7 |
| Gels/m2 > 1000 μm | 0 | 0 |
| Gels/m2 600-1000 μm | 0 | 0 |
| Gels/m2 300-599 μm | 5 | 2 |
| Gels/m2 100-299 μm | 104 | 63 |
| Optical gel index | 15.4 | 8.3 |

**Film sample preparation**

The test films consisting of the inventive polymer and respective comparative polymer of 40 μm thickness, were prepared using a Collin 30 lab scale mono layer blown film line.

This line has a screw diameter of 25 millimeters (mm), L/D of 25, a die diameter of 60 mm, a die gap of 1.5 mm. The film samples were produced at 194°C with an average thickness of 40 μm, with a 1:2 blow-up ratio, frostline distance (FLH) of 100 mm.

**Table 3: Film properties**

| | | CE1 | IE1 |
|---|---|---|---|
| Protrusion Puncture Parameters | | | |
| Energy to break | J/mm | 120 | 135 |
| Force at break | N/mm | 741.5 | 814 |
| Tear Parameters | | | |
| Relative tear resistance MD | N/mm | 120.4 | 133.6 |
| Relative tear resistance TD | N/mm | 163.6 | 182.3 |
| Further Parameters | | | |
| Tensile Modulus/MD | MPa | 160 | 166 |
| Tensile Modulus/TD | MPa | 4.2 | 4.4 |
| Seal initiation temperature | °C | 84 | 82 |

As can be seen from the Tables above, blown films based on the trimodal metallocene-catalysed polymer of ethylene with 1-butene and 1-hexene comonomers have a lower gel level (lower optical gel index) and improved protrusion puncture parameters as well as improved tear resistance.

## Claims

1. Monolayer blown film comprising at least 80.0 wt% of a trimodal metallocene-catalysed polymer of ethylene with at least two different comonomers selected from alpha-olefins having from 4 to 10 carbon atoms, which has

    a) $MFR_2$ of 0.5 to 5 g/10 min (ISO1133, 190°C, 2.16 kg load),
    b) $MFR_{21}$/ $MFR_2$ of 10 to 25 ($MFR_{21}$ determined according to ISO1133, 190°C, 21.6 kg load)
    c) a density of 910 to 925 kg/$m^3$ determined according to ISO 1183
    d) a MWD (ISO 16014-4:2003) in the range of from 3.0 to 5.0 and
    which consists of

        (i) an ethylene polymer component (A), comprising ethylene polymer fraction (A-1) and ethylene polymer fraction (A-2) and
        (ii) an ethylene polymer component (B),

    wherein the $MFR_2$ of the ethylene polymer components (A) and (B) are different from each other,
    wherein the monolayer blown film is **characterized**
    **by** a relative Elmendorf tear resistance measured according to ISO 6383/2 on a blown film with a film thickness of 40 μm in machine direction (MD) of at least 125 N/mm and in transversal direction (TD) of at least 165 N/mm.

2. Monolayer blown film according to claim 1, wherein the film is further **characterized by** a puncture energy to break measured according to ASTM D5748 of at least 125 J/mm, preferably at least 130 J/mm.

3. Monolayer blown film according to claim 1 or 2, wherein the film is further **characterized by** a puncture force to break measured according to ASTM D5748 on a blown film with a film thickness of 40 μm of at least 760 N/mm, preferably at least 780 N/mm.

4. Monolayer blown film according to anyone of the preceding claims, wherein the film has an optical gel index of 12 or less, measured with an OCS gel counting apparatus on films with a film thickness of 70 μm as described in the experimental part.

5. Monolayer blown film according to anyone of the preceding claims 1-3, wherein

    the ethylene polymer component (A) consists of ethylene polymer fraction (A-1) and ethylene polymer fraction (A-2), wherein both fractions are copolymers of ethylene and a first alpha-olefin comonomer having 4 to 10 carbon atoms, preferably 1-butene and
    the ethylene polymer component (B) comprises a second alpha-olefin comonomer different from the first alpha-olefin comonomer, the second alpha-olefin comonomer for ethylene polymer component (B) having 6 to 10 carbon atoms, preferably 1-hexene.

6. Monolayer blown film according to anyone of the preceding claims, wherein the ratio of the $MFR_2$ of ethylene polymer component (A) ($MFR_2$(A)) to the $MFR_2$ of the trimodal metallocene catalysed polyethylene copolymer ($MFR_2$(final)), $MFR_2$(A)/$MFR_2$(final) is below 4.0, preferably in a range of from 2.0 to 3.8, more preferably from 2.5 to 3.5.

7. Monolayer blown film according to anyone of the preceding claims, wherein the ethylene polymer component (A) may have a melt flow rate $MFR_2$ (ISO1133, 2.16 kg, 190°C) of from 1.0 to 20.0 g/10min, preferably 2.0 to 15.0 g/10 min, more preferably 3.0 to 10.0 g/10 min and may have a density (ISO 1183) of from 925 to 955 kg/$m^3$, preferably from 930 to 955 kg/$m^3$, more preferably from 935 to 950 kg/$m^3$, and even more preferably from 935 to 945 kg/$m^3$.

8. Monolayer blown film according to anyone of the preceding claims, wherein the ratio of the $MFR_2$ of ethylene polymer component (A) to the $MFR_2$ of ethylene polymer component (B) is of 1.5 to 30, preferably of 2.0 to 20, more preferably of 2.5 to 10 and even more preferably of 2.8 to 8.0.

**9.** Monolayer blown film according to anyone of the preceding claims, wherein ethylene polymer fraction (A-1) and ethylene polymer fraction (A-2) of ethylene polymer component (A) are produced in two consecutive steps.

**10.** Monolayer blown film as claimed in any of the preceding claims, wherein the film has a sealing initiation temperature (SIT), determined as described in the experimental part on a blown film with a film thickness of 40 $\mu$m, between 65°C and 90°C, preferably between 70°C and 85°C, further preferred between 75° C and 83°C.

**11.** Monolayer blown film as claimed in any of the preceding claims, wherein the trimodal metallocene-catalysed polymer of ethylene is produced in a 3-stage process in the presence of a metallocene catalyst, the process comprising

a first slurry reactor (loop reactor 1) wherein the first ethylene polymer fraction (A-1) is produced ,
whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1), forming the first ethylene polymer component (A), the loop reactor 2 is further connected in series to a gas phase reactor (GPR), so that the first ethylene polymer component (A) leaving the second slurry reactor is fed to the GPR to produce the trimodal polyethylene copolymer, whereby
the polymerization steps may be preceded by a prepolymerization step.

**12.** A monolayer blown film as claimed in any of the preceding claims, wherein the trimodal metallocene catalysed polymer of ethylene is produced in the presence of either a metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
R is a bridge of 1-7 atoms, e.g. 1 to 2 atoms;
X is a sigma ligand;
n is 0 or 1;
M is a transition metal of Group 4, e.g. Ti, Zr or Hf, especially Zr or Hf; or
a metallocene has the following formula (II):

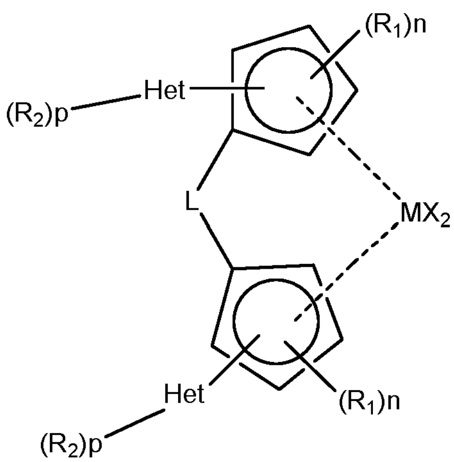

(II)

wherein each X is independently a halogen atom, a $C_{1-6}$-alkyl, $C_{1-6}$-alkoxy group, phenyl or benzyl group;
each Het is independently a monocyclic heteroaromatic containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;

each n is 1 to 2;
each $R_2$ is the same or different and is a $C_{1-6}$-alkyl group, $C_{1-6}$-alkoxy group or -Si(R)$^3$ group;
each R is $C_{1-10}$-alkyl or phenyl group optionally substituted by 1 to 3 $C_{1-6}$-alkyl groups; and
each p is 0 to 1.

**13.** Monolayer blown film as claimed in any of the preceding claims, wherein the film comprises at least 80 wt% up to 100 wt%, preferably at least 85 wt% up to 100 wt%, more preferably at least 90 wt% up to 100 wt% and even more preferred at least 95 wt% up to 100 wt% of the trimodal metallocene catalysed polyethylene polymer, still more preferably the film consists of the trimodal metallocene catalysed polyethylene polymer

**14.** Monolayer blown film as claimed in any of the preceding claims, wherein the film furthermore comprises a low density polyethylene (LDPE), preferably a low density polyethylene produced in a high pressure process, wherein the LDPE preferably has a density (ISO1183) in the range of 910 to 940 kg/m$^3$, more preferably in the range of 915 to 935 kg/m$^3$, still more preferably in the range of 918 to 930 kg/m$^3$ and a melt flow rate $MFR_2$ (ISO1133, 2.16 kg, 190°C) in the range of from 0.05 to 2.0 g/10min, more preferably in the range of from 0.10 to 1.8 g/10min, and even more preferably in the range of from 0.15 to 1.5 g/10 min, whereby the trimodal metallocene catalysed polyethylene polymer is combined with 0.0 to 20.0 wt%, preferably 5.0 to 18.0 wt% and more preferably 8.0 to 15.0 wt%, of a low density polyethylene (LDPE).

**15.** Use of a monolayer blown film as claimed in any of the preceding claims in packaging silage.

## Patentansprüche

**1.** Einschichtige Blasfolie, die wenigstens 80 Gewichtsprozent eines trimodalen Metallocen-katalysierten Polymers von Ethylen mit wenigstens zwei verschiedenen Comonomeren, die aus Alpha-Olefinen mit 4 bis 10 Kohlenstoffatomen ausgewählt sind, umfasst, aufweisend:

a) eine Schmelzflussrate ($MFR_2$) von 0,5 bis 5 g/10 min (ISO1133, 190°C, 2,16 kg Last),
b) ein Schmelzflussratenverhältnis ($MFR_{21}/MFR_2$) von 10 bis 25 ($MFR_{21}$ bestimmt gemäß ISO1133, 190°C, 21,6 kg Last),
c) eine Dichte von 910 bis 925 kg/m$^3$, bestimmt gemäß ISO 1183,
d) eine Molekulargewichtsverteilung (MWD) (ISO 16014-4:2003) im Bereich von 3,0 bis 5,0,
bestehend aus:

(i) einer Ethylenpolymerkomponente (A), die eine Ethylenpolymerfraktion (A-1) und eine Ethylenpolymerfraktion (A-2) aufweist, und
(ii) eine Ethylenpolymerkomponente (B),

wobei die Schmelzflussrate ($MFR_2$) der Ethylenpolymerkomponenten (A) und (B) jeweils verschieden sind, wobei die einschichtige Blasfolie **gekennzeichnet ist durch**:
eine relative Elmendorf-Reißbeständigkeit, gemessen gemäß ISO 6383/2 an einer Blasfolie mit einer Foliendicke von 40 μm, in der Maschinenrichtung (MD) von wenigstens 125 N/mm und in der Transversalrichtung (TD) von wenigstens 165 N/mm.

**2.** Einschichtige Blasfolie nach Anspruch 1, wobei die Folie weiterhin **gekennzeichnet ist durch** eine Durchstoßfestigkeit, gemessen gemäß ASTM D5748, von wenigstens 125 J/mm und vorzugsweise wenigstens 130 J/mm.

**3.** Einschichtige Blasfolie nach Anspruch 1 oder 2, wobei die Folie weiterhin **gekennzeichnet ist durch** eine Durchstoßfestigkeit, gemessen gemäß ASTM D5748 an einer Blasfolie mit einer Foliendicke von 40 μm, von wenigstens 760 N/mm und vorzugweise wenigstens 780 N/mm.

**4.** Einschichtige Blasfolie nach einem der vorstehenden Ansprüche, wobei die Folie einen optischen Gelindex von 12 oder weniger aufweist, gemessen mit einer OCS-Gelzählvorrichtung an Folien mit einer Filmdicke von 70 μm wie in dem experimentellen Teil beschrieben.

**5.** Einschichtige Blasfolie nach einem der vorstehenden Ansprüche 1 bis 3, wobei die Ethylenpolymerkomponente (A) aus einer Ethylenpolymerfraktion (A-1) und einer Ethylenpolymerfraktion (A-2) besteht, wobei beide Fraktionen

Copolymere von Ethylen und einem ersten Alpha-Olefin-Comonomer mit 4 bis 10 Kohlenstoffen wie vorzugweise 1-Buten sind und wobei die Ethylenpolymerkompoennte (B) ein zweites Alpha-Olefin-Comonomer, das verschieden von dem ersten Alpha-Olefin-Comonomer ist, umfasst, wobei das zweite Alpha-Olefin-Comonomer für die Ethylenpolymerkomponente (B) 6 bis 10 Kohlenstoffe aufweist und vorzugsweise 1-Hexen ist.

**6.** Einschichtige Blasfolie nach einem der vorstehenden Ansprüche, wobei das Verhältnis $MFR_2$(A)/$MFR_2$(final) der Schmelzflussrate ($MFR_2$) der Ethylenpolymerkomponente (A) ($MFR_2$(A)) zu der Schmelzflussrate ($MFR_2$) des trimodalen Metallocen-katalysierten Polyethylencopolymers ($MFR_2$(final)) unter 4,0 und vorzugsweise im Bereich von 2,0 bis 3,8 und noch besser im Bereich von 2,5 bis 3,5 liegt.

**7.** Einschichtige Blasfolie nach einem der vorstehenden Ansprüche, wobei die Ethylenpolymerkomponente (A) eine Schmelzflussrate ($MFR_2$) (ISO1133, 2,16 kg, 190°C) von 1,0 bis 20,0 g/10 min, vorzugsweise von 2,0 bis 15,0 g/10 min und noch besser von 3,0 bis 10,0 g/10 min aufweisen kann und eine Dichte (ISO 1183) von 925 bis 955 kg/m$^3$, vorzugsweise von 930 bis 955 kg/m$^3$, noch besser von 935 bis 950 kg/m$^3$ und am besten von 935 bis 945 kg/m$^3$ aufweisen kann.

**8.** Einschichtige Blasfolie nach einem der vorstehenden Ansprüche, wobei das Verhältnis der Schmelzflussrate ($MFR_2$) der Ethylenpolymerkomponente (A) zu der Schmelzflussrate ($MFR_2$) der Ethylenpolymerkomponente (B) im Bereich von 1,5 bis 30, vorzugsweise von 2,0 bis 20, noch besser von 2,5 bis 10 und am besten von 2,8 bis 8,0 liegt.

**9.** Einschichtige Blasfolie nach einem der vorstehenden Ansprüche, wobei die Ethylenpolymerfraktion (A-1) und die Ethylenpolymerfraktion (A-2) der Ethylenpolymerkomponente (A) in zwei aufeinander folgenden Schritten erzeugt werden.

**10.** Einschichtige Blasfolie nach einem der vorstehenden Ansprüche, wobei die Folie eine Dichtungseinleitungstemperatur (SIT), bestimmt wie in dem experimentellen Teil beschrieben an einer Blasfolie mit einer Filmdicke von 40 $\mu$m, zwischen 65°C und 90°C, vorzugsweise zwischen 70°C und 85°C und noch besser zwischen 75°C und 83°C aufweist.

**11.** Einschichtige Blasfolie nach einem der vorstehenden Ansprüche, wobei das trimodale Metallocen-katalysierte Polymer von Ethylen in einem dreistufigen Prozess in Anwesenheit eines Metallocen-Katalysators erzeugt wird, wobei der Prozess umfasst:

einen ersten Suspensionsreaktor (Schlaufenreaktor 1), in dem die erste Ethylenpolymerfraktion (A-1) erzeugt wird,
wobei der erste Suspensionsreaktor in Reihe mit einem weiteren Suspensionsreaktor (Schlaufenreaktor 2) verbunden ist, sodass die in dem Schlaufenreaktor 1 erzeugte erste Ethylenpolymerfraktion (A-1) zu dem Schlaufenreaktor 2 geführt wird, wobei die zweite Ethylenpolymerfraktion (A-2) in Anwesenheit der ersten Fraktion (A-1), die die erste Ethylenpolymerkomponente (A) bildet, erzeugt wird, wobei der Schlaufenreaktor 2 weiterhin in Reihe mit einem Gasphasenreaktor (GPR) verbunden ist, sodass die erste Ethylenpolymerkomponente (A), die den zweiten Schlaufenreaktor verlässt, zu dem GPR geführt wird, um das trimodale Polyethylencopolymer zu erzeugen,
wobei den Polymerisationsschritten ein Vorpolymerisationsschritt vorangehen kann.

**12.** Einschichtige Blasfolie nach einem der vorstehenden Ansprüche, wobei das trimodale Metallocen-katalysierte Polymer von Ethylen in Anwesenheit von einem Metallocenkomplex erzeugt wird, der eine Verbindung der Formel (I) ist,

$$(Cp)_2R_nMX_2 \qquad (I)$$

wobei:

jedes Cp unabhängig ein nicht-substituierter oder substituierter und/oder fusionierter Cyclopentadienyl-Ligand ist, z.B. ein substituierter oder nicht-substituierter Cyclopentadienyl-, ein substituierter oder nicht-substituierter Indenyl- oder ein substituierter oder nicht-substituierter Fluorenyl-Ligand ist,
R eine Brücke von 1-7 Atomen, z.B. 1 bis 2 Atomen, ist,
X ein Sigma-Ligand ist,
n 0 oder 1 ist,
M ein Übergangsmetall der Gruppe 4, z.B. Ti, Zr oder Hf und insbesondere Zr oder Hf ist, oder
ein Metallocen die folgende Formel (II) aufweist:

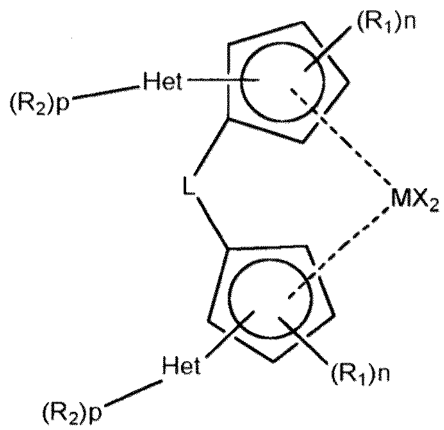

(II)

wobei jedes X unabhängig ein Halogenatom, ein $C_{1-6}$-Alkyl, eine $C_{1-6}$-Alkoxygruppe, eine Phenyl- oder Benzylgruppe ist,
jedes Het unabhängig ein monozyklisches Heteroaromat ist, das wenigstens ein aus O oder S ausgewähltes Heteroatom enthält,
L -$R'_2$Si- ist, wobei jedes R' unabhängig $C_{1-20}$-Hydrocarbyl oder $C_{1-10}$-Alkyl, substituiert mit Alkoxy mit 1 bis 10 Kohlenstoffatomen, ist,
M Ti, Zr oder Hf ist,
jedes $R_1$ gleich oder verschieden ist und eine $C_{1-6}$-Alkylgruppe oder $C_{1-6}$-Alkoxylgruppe ist,
jedes n 1 bis 2 ist,
jedes $R_2$ gleich oder verschieden ist und eine $C_{1-6}$-Alkylgruppe, $C_{1-6}$-Alkoxylgruppe oder -Si(R)$^3$-Gruppe ist,
jedes R eine $C_{1-10}$-Alkyl- oder Phenylgruppe, optional substituiert durch 1 bis 3 $C_{1-6}$-Alkylgruppen, ist, und
jedes p 0 bis 1 ist.

13. Einschichtige Blasfolie nach einem der vorstehenden Ansprüche, wobei die Folie wenigstens 80 Gewichtsprozent bis 100 Gewichtsprozent, vorzugsweise wenigstens 85 Gewichtsprozent bis 100 Gewichtsprozent, noch besser wenigstens 90 Gewichtsprozent bis 100 Gewichtsprozent und am besten 95 Gewichtsprozent bis 100 Gewichtsprozent des trimodalen Metallocen-katalysierten Polyethylenpolymers umfasst und wobei die Folie am allerbesten aus dem trimodalen Metallocen-katalysierten Polyethylenpolymer besteht.

14. Einschichtige Blasfolie nach einem der vorstehenden Ansprüche, wobei die Folie weiterhin ein Polyethylen niedriger Dichte (LDPE) und vorzugsweise ein in einem Hochdruckprozess erzeugtes Polyethylen niedriger Dichte umfasst, wobei das LDPE vorzugweise eine Dichte (ISO1183) im Bereich von 910 bis 940 kg/m$^3$, noch besser im Bereich von 915 bis 935 kg/m$^3$, und am besten im Bereich von 918 bis 930 kg/m$^3$ und eine Schmelzflussrate ($MFR_2$) (ISO1133, 2,16 kg, 190°C) im Bereich von 0,05 bis 2,0 g/10 min, vorzugsweise im Bereich von 0,10 bis 1,18 g/10 min und noch besser im Bereich von 0,15 bis 1,5 g/10 min aufweist, wobei das trimodale Metallocen-katalysierte Polyethylenpolymer mit 0,0 bis 20,0 Gewichtsprozent, vorzugsweise 5,0 bis 18,0 Gewichtsprozent und noch besser 8,0 bis 15,0 Gewichtsprozent eines Polyethylens niedriger Dichte kombiniert ist.

15. Verwendung einer einschichtigen Blasfolie gemäß einem der vorstehenden Ansprüche für das Verpacken von Silage.

## Revendications

1. Film soufflé monocouche comprenant au moins 80,0 % en poids d'un polymère trimodal catalysé par métallocène, d'éthylène avec au moins deux comonomères différents choisis parmi les alpha-oléfines ayant de 4 à 10 atomes de carbone, qui a

a) un $MFR_2$ de 0,5 à 5 g/10 min (ISO 1133, 190 °C, 2,16 kg de charge),
b) un $MFR_{21}$/ $MFR_2$ de 10 à 25 ($MFR_{21}$ déterminé selon ISO 1133, 190 °C, 21,6 kg de charge)
c) une densité de 910 à 925 kg/m$^3$ déterminée selon ISO 1183
d) un MWD (ISO 16014-4:2003) dans la plage allant de 3,0 à 5,0 et qui consiste en

(i) un composant polymère d'éthylène (A), comprenant une fraction de polymère d'éthylène (A-1) et une

fraction de polymère d'éthylène (A-2) et
(ii) un composant de polymère d'éthylène (B),

dans lequel les $MFR_2$ (respectifs) des composants de polymère d'éthylène (A) et (B) sont différents l'un de l'autre, dans lequel le film soufflé monocouche est **caractérisé par** une résistance relative à la déchirure Elmendorf mesurée selon ISO 6383/2 sur un film soufflé d'une épaisseur de film de 40 μm dans le sens machine (MD) d'au moins 125 N/mm et dans le sens transversal (TD) d'au moins 165 N/mm.

2. Film soufflé monocouche selon la revendication 1, dans lequel le film est en outre **caractérisé par** une énergie de perforation mesurée selon ASTM D5748 d'au moins 125 J/mm, de préférence d'au moins 130 J/mm.

3. Film soufflé monocouche selon la revendication 1 ou 2, dans lequel le film est en outre **caractérisé par** une force de perforation mesurée selon ASTM D5748 sur un film soufflé d'une épaisseur de 40 μm d'au moins 760 N/mm, de préférence d'au moins 780 N/mm.

4. Film soufflé monocouche selon l'une quelconque des revendications précédentes, dans lequel le film a un indice de gel optique de 12 ou moins, mesuré avec un appareil de comptage de gel OCS sur des films d'une épaisseur de film de 70 μm, comme décrit dans la partie expérimentale.

5. Film soufflé monocouche selon l'une quelconque des revendications 1 à 3 précédentes, dans lequel le composant de polymère d'éthylène (A) consiste en une fraction de polymère d'éthylène (A-1) et une fraction de polymère d'éthylène (A-2), les deux fractions étant des copolymères d'éthylène et d'un premier comonomère d'alpha-oléfine ayant de 4 à 10 atomes de carbone, de préférence le 1-butène, et le composant de polymère d'éthylène (B) comprend un deuxième comonomère alpha-oléfine différent du premier comonomère alpha-oléfine, le deuxième comonomère alpha-oléfine pour le composant de polymère d'éthylène (B) ayant de 6 à 10 atomes de carbone, de préférence le 1-hexène.

6. Film soufflé monocouche selon l'une quelconque des revendications précédentes, dans lequel le rapport du $MFR_2$ du composant de polymère éthylène (A) ($MFR_2(A)$) au $MFR_2$ du copolymère de polyéthylène trimodal catalysé par métallocène ($MFR_2(final)$), $MFR_2(A)/MFR_2(final)$ est inférieur à 4,0, de préférence dans une plage allant de 2,0 à 3,8, de manière plus préférée de 2,5 à 3,5.

7. Film soufflé monocouche selon l'une quelconque des revendications précédentes, dans lequel le composant de polymère d'éthylène (A) peut avoir un taux de fluidité à chaud $MFR_2$ (ISO 1133, 2,16 kg, 190 °C) de 1,0 à 20,0 g/10 min, de préférence de 2,0 à 15,0 g/10 min, de manière plus préférée de 3,0 à 10,0 g/10 min et peut avoir une densité (ISO 1183) de 925 à 955 kg/$m^3$, de préférence de 930 à 955 kg/$m^3$, de manière plus préférée de 935 à 950 kg/$m^3$, et de manière encore plus préférée de 935 à 945 kg/$m^3$.

8. Film soufflé monocouche selon l'une quelconque des revendications précédentes, dans lequel le rapport du $MFR_2$ du composant de polymère d'éthylène (A) au $MFR_2$ du composant de polymère d'éthylène (B) est de 1,5 à 30, de préférence de 2,0 à 20, de manière plus préférée de 2,5 à 10 et de manière encore plus préférée de 2,8 à 8,0.

9. Film soufflé monocouche selon l'une quelconque des revendications précédentes, dans lequel la fraction de polymère d'éthylène (A-1) et la fraction de polymère d'éthylène (A-2) du composant de polymère d'éthylène (A) sont produites en deux étapes consécutives.

10. Film soufflé monocouche selon l'une quelconque des revendications précédentes, dans lequel le film a une température d'initiation du scellage (SIT), déterminée, comme décrit dans la partie expérimentale, sur un film soufflé d'une épaisseur de film de 40 μm, comprise entre 65 °C et 90 °C, de préférence entre 70 °C et 85 °C, de manière plus préférée entre 75 °C et 83 °C.

11. Film soufflé monocouche selon l'une quelconque des revendications précédentes, dans lequel le polymère d'éthylène trimodal catalysé par métallocène est produit dans un procédé en trois étapes en présence d'un catalyseur métallocène, le procédé comprenant

un premier réacteur à boues (réacteur en boucle 1) dans lequel la première fraction de polymère d'éthylène (A-1) est produite,

le premier réacteur en boucle à boues étant connecté en série à un autre réacteur à boues (réacteur en boucle 2), de sorte que la première fraction de polymère d'éthylène (A-1) produite dans le réacteur en boucle 1 est acheminée vers le réacteur en boucle 2, la deuxième fraction de polymère d'éthylène (A-2) étant produite en présence de la première fraction (A-1), pour former le premier composant de polymère d'éthylène (A), le réacteur en boucle 2 étant en outre connecté en série à un réacteur en phase gazeuse (RPG), de sorte que le premier composant de polymère d'éthylène (A) quittant le deuxième réacteur à boues est envoyé au RPG pour produire le copolymère de polyéthylène trimodal,
les étapes de polymérisation pouvant être précédées d'une étape de prépolymérisation.

**12.** Film soufflé monocouche selon l'une quelconque des revendications précédentes, dans lequel le polymère d'éthylène trimodal catalysé par métallocène est produit en présence soit d'un complexe de métallocène, soit d'un composé de formule (I)

$$(Cp)_2R_nMX_2 \qquad (I)$$

dans lequel :

chaque Cp est indépendamment un ligand cyclopentadiényle non substitué ou substitué et/ou fusionné, par exemple un ligand cyclopentadiényle substitué ou non substitué, indényle substitué ou non substitué ou fluorényle substitué ou non substitué ;
R est un pont de 1 à 7 atomes, par exemple de 1 à 2 atomes ;
X est un ligand sigma ;
n est 0 ou 1 ;
M est un métal de transition du groupe 4, par exemple Ti, Zr ou Hf, en particulier Zr ou Hf ; ou
un métallocène a la formule suivante (II) :

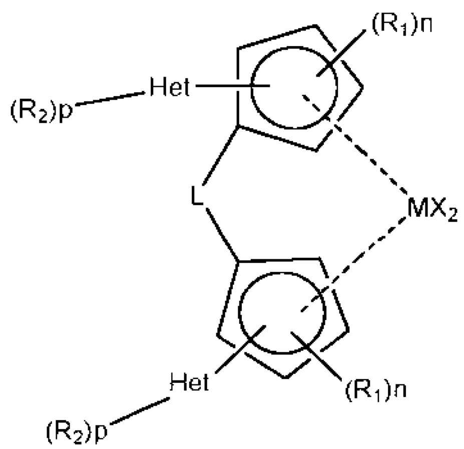

dans lequel chaque X est indépendamment un atome d'halogène, un groupe alkyle en $C_{1-6}$, un groupe alcoxy en $C_{1-6}$, un groupe phényle ou un groupe benzyle ;
chaque Het est indépendamment un hétéroaromatique monocyclique contenant au moins un hétéroatome choisi parmi O ou S ;
L est $-R'_2Si-$, où chaque R' est indépendamment un hydrocarbyle en $C_{1-20}$ ou un alkyle en $C_{1-10}$substitué par un alcoxy ayant de 1 à 10 atomes de carbone ;
M est Ti, Zr ou Hf ;
chaque $R_1$ est identique ou différent et représente un groupe alkyle en $C_{1-6}$ ou
un groupe alcoxy en $C_{1-6}$ ;
chaque n est 1 à 2 ;
chaque $R_2$ est identique ou différent et représente un groupe alkyle en $C_{1-6}$, un groupe alcoxy en $C_{1-6}$ ou un groupe $-Si(R)^3$ ;
chaque R est un groupe alkyle en $C_{1-10}$ ou un groupe phényle éventuellement substitué par 1 à 3 groupes alkyle en $C_{1-6}$ ; et
chaque p est 0 à 1.

**13.** Film soufflé monocouche selon l'une quelconque des revendications précédentes, dans lequel le film comprend au moins 80 % en poids jusqu'à 100 % en poids, de préférence au moins 85 % en poids jusqu'à 100 % en poids, de manière plus préférée au moins 90 % en poids jusqu'à 100 % en poids et de manière encore plus préférée au moins 95 % en poids jusqu'à 100 % en poids du polymère de polyéthylène trimodal catalysé par métallocène, de manière encore plus préférée le film est constitué du polymère de polyéthylène trimodal catalysé par métallocène.

**14.** Film soufflé monocouche selon l'une quelconque des revendications précédentes, dans lequel le film comprend en outre un polyéthylène basse densité (PEBD), de préférence un polyéthylène basse densité produit par un procédé à haute pression, dans lequel le PEBD a de préférence une densité (ISO 1183) dans la plage allant de 910 à 940 $kg/m^3$, de manière plus préférée dans la plage allant de 915 à 935 $kg/m^3$, de manière encore plus préférée dans la plage allant de 918 à 930 $kg/m^3$ et un indice de fluidité à chaud $MFR_2$ (ISO 1133, 2,16 kg, 190 °C) dans la plage allant de 0,05 à 2,0 g/10 min, de manière plus préférée dans la plage allant de 0,10 à 1,8 g/10 min, et de manière encore plus préférée dans la plage allant de 0,15 à 1,5 g/10 min, le polymère de polyéthylène trimodal catalysé par métallocène étant combiné à 0,0 à 20,0 % en poids, de manière préférée de 5,0 à 18,0 % en poids et de manière encore plus préférée de 8,0 à 15,0 % en poids, d'un polyéthylène à basse densité (LDPE).

**15.** Utilisation d'un film soufflé monocouche selon l'une quelconque des revendications précédentes pour le conditionnement d'ensilage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3238938 A
- EP 1472298 A
- WO 2016198273 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A

### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys,* 2006, vol. 207, 382
- **PARKINSON, M. ; KLIMKE, K ; SPIESS, H.W ; WILHELM, M.** *Macromol. Chem. Phys,* 2007, vol. 208, 2128
- **POLLARD, M. ; KLIMKE, K. ; GRAF, R ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn,* 2005, vol. 176, 239
- **GRIFFIN, J.M ; TRIPON, C. ; SAMOSON, A ; FILIP, C. ; BROWN, S.P.** *Mag. Res. in Chem,* 2007, vol. 45 (S1), S198
- **CASTIGNOLLES, P ; GRAF, R. ; PARKINSON, M. ; WILHELM, M ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A ; BAUGH, D ; WINNIFORD, B.** *J. Mag. Reson.,* 2007, vol. 187, 225
- **BUSICO, V. ; CARBONNIERE, P. ; CIPULLO, R ; PELLECCHIA, R. ; SEVERN, J. ; TALARICO, G.** *Macromol. Rapid Commun,* 2007, vol. 28, 1128
- **RESCONI, L. ; CAVALLO, L. ; FAIT, A ; PIEMONTESI, F.** *Chem. Rev.,* 2000, vol. 100, 1253